# EUROPEAN PATENT SPECIFICATION

(11) **EP 4 667 129 B1**
(45) Date of publication and mention of the grant of the patent: **28.10.2026**
(21) Application number: 25183691.2
(22) Date of filing: 18.06.2025
(51) Int. Cl.: B21D 28/00, B21D 55/00, B30B 15/00, B30B 15/26, B30B 15/28, G05B 19/4065

(54) **PRESS MACHINE AND DIE CONDITION MONITORING METHOD**
PRESSE UND VERFAHREN ZUR ÜBERWACHUNG DES GESENKZUSTANDES
MACHINE DE PRESSE ET PROCÉDÉ DE SURVEILLANCE DE L'ÉTAT D'UNE MATRICE

(30) Priority: 18.06.2024 JP 2024098056
(43) Date of publication of application: 24.12.2025
(73) Proprietor: Aida Engineering, Ltd., Sagamihara-shi, Kanagawa 252-5181 (JP)
(72) Inventor: YANAGIHARA, Yoshiki, Kanagawa 252-5181 (JP)
(74) Representative: MERH-IP Matias Erny Reichl Hoffmann Patentanwälte PartG mbB

(56) References cited:
- EP-B1- 3 313 654
- WO-A1-2023/162306
- JP-A- 2020 192 577
- JP-A- H0 819 900
- US-A1- 20240 173 934

## Description

### BACKGROUND OF THE INVENTION

The present invention relates to a press machine and a die condition monitoring method.

Dies used in punching require regular maintenance (grinding) of punches and dies. Conventionally, a method is known for determining a service life of a die by measuring stress and strain imposed on the die during punching using a sensor (such as a strain gauge) installed in the die (see, JP 2017-87224 A and JP 2019-10658 A).

A load detecting and coping apparatus is known from JP H08 19900 A, wherein the load acting on the punch tool is detected by load detecting means at each time of punching or at the time predetermined punching is done. The load may be detected by detecting both the load acting in the punching direction and the load acting in the pulling direction, or may detect only one of the loads. The detected value of the load thus detected is compared with the set value by the abnormality determining means. If the detected value exceeds the set value, a mechanical abnormality determination signal is output.

With conventional methods, sensors must be installed in all the dies, and when they are not installed, the life of the die cannot be determined. In addition, the conventional methods require consideration of positional errors when removing and installing sensors, which is cumbersome.

### SUMMARY OF THE INVENTION

The present invention provides a press machine and a die condition monitoring method capable of monitoring the condition of a die performing punching using a sensor provided in the press machine.

According to a first aspect of the present invention, there is provided a press machine including:
a detection unit that detects load values during punching of a workpiece material based on a signal output from a sensor provided in the press machine;
a storage unit that stores the load values for one cycle of the press machine detected by the detection unit in association with identification information of a die attached to the press machine during detection of the load values;
a calculation unit that calculates a total load which is a sum of loads from when an upper die of the die contacts the workpiece material until a breakthrough phenomenon occurs after the punching is completed or until the load values decrease to a predetermined threshold value, based on the load values for one cycle of the press machine; and
an information generation unit that generates and outputs information on a state of the die based on the total load calculated based on the load values for one cycle of the press machine detected by the detection unit and the total load calculated based on the load values for one cycle of the press machine stored in association with the die attached to the press machine during the detection of the load values.

According to a second aspect of the present invention, there is provided a die condition monitoring method for a press machine, the method including:
a detection step of detecting load values during punching of a workpiece material based on a signal output from a sensor provided in the press machine;
a storage step of storing the load values for one cycle of the press machine detected by the detection step in association with identification information of a die attached to the press machine during detection of the load values;
a calculation step of calculating a total load which is a sum of loads from when an upper die of the die contacts the workpiece material until a breakthrough phenomenon occurs after the punching is completed or until the load values decrease to a predetermined threshold value, based on the load values for one cycle of the press machine; and
an information generation step of generating and outputting information on a state of the die based on the total load calculated based on the load values for one cycle of the press machine detected by the detection step and the total load calculated based on the load values for one cycle of the press machine stored in association with the die attached to the press machine during the detection of the load values.

### BRIEF DESCRIPTION OF THE DRAWINGS

FIG. 1 illustrates an example of a configuration of a press machine according to an embodiment of the present invention.
FIG. 2 is a flowchart illustrating a flow of processing for storing load values.
FIG. 3 illustrates an example of the load values for one press cycle.
FIG. 4 is a flowchart illustrating a flow of processing for monitoring a state of a die.
FIG. 5 illustrates three phases of a load waveform during punching.
FIG. 6 illustrates data indicating only the second phase, extracted from the load waveform illustrated in FIG. 5,.
FIG. 7 illustrates a total load and a working time.
FIG. 8 illustrates a load waveform stored immediately after a maintenance and a load waveform stored immediately before the maintenance.

### DETAILED DESCRIPTION OF THE INVENTION

(1) According to an embodiment of the present invention, there is provided a press machine including:
   a detection unit that detects load values during punching of a workpiece material based on a signal output from a sensor provided in the press machine;
   a storage unit that stores the load values for one cycle of the press machine detected by the detection unit in association with identification information of a die attached to the press machine during detection of the load values;
   a calculation unit that calculates a total load which is a sum of loads from when an upper die of the die contacts the workpiece material until a breakthrough phenomenon occurs after the punching is completed or until the load values decrease to a predetermined threshold value, based on the load values for one cycle of the press machine; and
   an information generation unit that generates and outputs information on a state of the die based on the total load calculated based on the load values for one cycle of the press machine detected by the detection unit and the total load calculated based on the load values for one cycle of the press machine stored in association with the die attached to the press machine during the detection of the load values.

According to an embodiment of the present invention, there is provided a die condition monitoring method for a press machine, the method comprising:
a detection step of detecting load values during punching of a workpiece material based on a signal output from a sensor provided in the press machine;
a storage step of storing the load values for one cycle of the press machine detected by the detection step in association with identification information of a die attached to the press machine during detection of the load values;
a calculation step of calculating a total load which is a sum of loads from when an upper die of the die contacts the workpiece material until a breakthrough phenomenon occurs after the punching is completed or until the load values decrease to a predetermined threshold value, based on the load values for one cycle of the press machine; and
an information generation step of generating and outputting information on a state of the die based on the total load calculated based on the load values for one cycle of the press machine detected by the detection step and the total load calculated based on the load values for one cycle of the press machine stored in association with the die attached to the press machine during the detection of the load values.

According to the above embodiment, the load value during the punching is detected based on a signal from a sensor provided on the press machine, and the information on the state of the die is generated and output based on the total sum of loads (also referred to as total load) from when the upper die contacts the workpiece material until the breakthrough phenomenon occurs after the punching is completed, or until the load value decreases to a predetermined threshold value. Thus, it is possible to monitor the condition of the die without attaching any sensor to the die.

(2) In the press machine according to the above embodiment,
the information generation unit may generate the information on a state of the die based on a difference between the total load calculated based on the load values for one cycle of the press machine detected by the detection unit and the total load calculated based on the load values for one cycle of the press machine stored in association with the die attached to the press machine during the detection of the load values.

In the die condition monitoring method according to the above embodiment,
in the information generation step, the information on a state of the die may be generated based on a difference between the total load calculated based on the load values for one cycle of the press machine detected by the detection step and the total load calculated based on the load values for one cycle of the press machine stored in association with the die attached to the press machine during the detection of the load values.

(3) In the press machine according to the above embodiment,
the calculation unit may calculate a working time which is a time from when the upper die contacts the workpiece material until a breakthrough phenomenon occurs after the punching is completed or until the load values decrease to a predetermined threshold value, based on the load values for one cycle of the press machine, and
the information generation unit may generate the information on a state of the die based on the working time calculated based on the load values for one cycle of the press machine detected by the detection unit and the working time calculated based on the load values for one cycle of the press machine stored in association with the die attached to the press machine during the detection of load values.

In the die condition monitoring method according to the above embodiment,
in the calculation step, a working time which is a time from when the upper die contacts the workpiece material until a breakthrough phenomenon occurs after the punching is completed or until the load values decrease to a predetermined threshold value may be calculated based on the load values for one cycle of the press machine, and
in the information generation step, the information on a state of the die may be generated based on the working time calculated based on the load values for one cycle of the press machine detected by the detection step and the working time calculated based on the load values for one cycle of the press machine stored in association with the die attached to the press machine during the detection of load values.

According to the above embodiment, the load value during the punching is detected based on the signal from the sensor provided in the press machine, and information on the state of the die is generated and output based on the time (working time) from when the upper die contacts the workpiece material until the breakthrough phenomenon occurs after the punching is completed, or until the load value decreases to a predetermined threshold value. Thus, the state of the die can be monitored without attaching a sensor to the die.

(4) In the press machine according to the above embodiment,
the information generation unit may generate the information on a state of the die based on a difference between the working time calculated based on the load values for one cycle of the press machine detected by the detection unit and the working time calculated based on the load values for one cycle of the press machine stored in association with the die attached to the press machine during the detection of load values.

In the die condition monitoring method according to the above embodiment,
in the information generation step, the information on a state of the die may be generated based on a difference between the working time calculated based on the load values for one cycle of the press machine detected by the detection step and the working time calculated based on the load values for one cycle of the press machine stored in association with the die attached to the press machine during the detection of load values.

Some embodiments of the present invention will be described in detail below, with reference to the drawings.

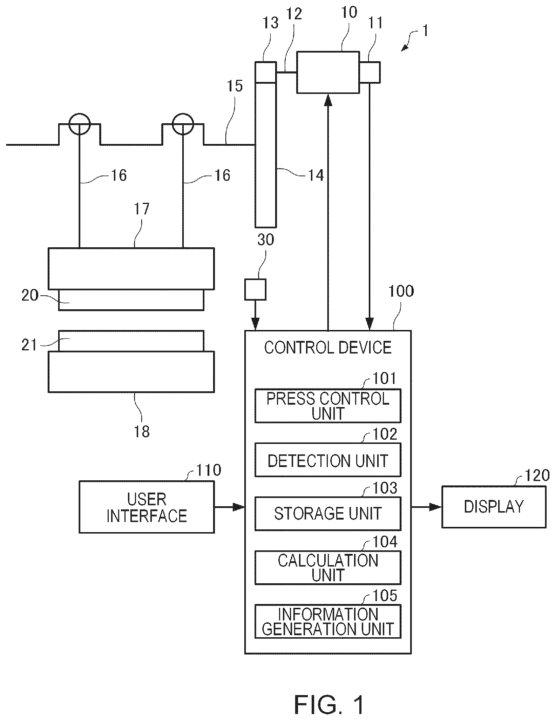

FIG. 1 is a diagram illustrating an example of a configuration of a press machine (a servo press) according to the present embodiment. A press machine 1 converts rotation of a servomotor 10 into a vertical reciprocating motion (a linear reciprocating motion, an elevating and lowering motion) of a slide 17 by an eccentric mechanism that converts a rotational motion into a linear motion, and performs press working (punching) on a workpiece material using the vertical reciprocating motion of the slide 17. The press machine 1 includes the servomotor 10, an encoder 11, a drive shaft 12, a drive gear 13, a main gear 14, a crankshaft 15, a connecting rod 16, the slide 17, a bolster 18, a control device 100, a user interface 110 (an action unit), and a display 120 (a display unit). The press machine is not limited to a servo press, and may be, for example, a mechanical press using a flywheel.

The drive shaft 12 is connected to a rotating shaft of the servomotor 10, and the drive gear 13 is connected to the drive shaft 12. The main gear 14 is meshed with the drive gear 13, the crankshaft 15 (a crank shaft) is connected to the main gear 14, and the connecting rod 16 is connected to the crankshaft 15. Rotating shafts such as the drive shaft 12 and the crankshaft 15 are supported by bearings (not illustrated) appropriately provided. An eccentric mechanism is formed between the crankshaft 15 and the connecting rod 16. This eccentric mechanism allows the slide 17 connected to the connecting rod 16 to move upward and downward relative to the bolster 18 on a stationary side. Here, the press machine 1 is a two-point drive press machine in which the crankshaft 15 and the slide 17 are connected by the two connecting rods 16 that also function as suspensions. An upper die 20 (an upper die or a punch) is attached to the slide 17, and a lower die 21 (a lower die or a die) is attached to the bolster 18.

The press machine 1 includes a load sensor 30 for detecting the load value when performing punching on the workpiece material. The load sensor 30 is a strain gauge attached to a right column (a right side frame) or a left column (a left side frame) of the press machine 1. The load sensor 30 may also be a pressure sensor provided in a hydraulic chamber formed in the slide 17. A signal (a voltage signal of the strain gauge or the pressure sensor) output from the load sensor 30 is input to the control device 100.

The control device 100 includes a press control unit 101, a detection unit 102, a storage unit 103, a calculation unit 104, and an information generation unit 105. The control device 100 may be divided into an independent device that controls the press machine, which is constituted of the press control unit 101, the user interface 110, and the display 120, and an independent load detection device, which is constituted of the detection unit 102, the storage unit 103, the calculation unit 104, the information generation unit 105, the user interface 110, and the display 120. In this case, the output signal of the load sensor 30 is directly input to the load detecting device. In addition, the operation information of the press machine, such as crank angle information, is input to the load detection device as necessary from the device that controls the press machine.

The detection unit 102 receives the signal output from the load sensor 30, converts the received signal based on the calibration data stored in the storage unit 103, and detects them as the load values during the punching. The calibration data indicates a relationship between the voltage signal and the load value, and is measured in advance using a load cell or the like and stored in the storage unit 103.

The storage unit 103 stores the load values for one press cycle detected by the detection unit 102 (time series information for one press cycle of the load values) in association with identification information (a die number) of a die (the upper die 20, the lower die 21) attached to the slide 17 and the bolster 18 of the press machine 1 when the load values are detected and a strokes per minute (SPM) when the load values are detected.

The calculation unit 104 calculates the total load which is a sum of the loads from when the upper die 20 contacts the workpiece material until a breakthrough phenomenon occurs after the punching is completed, or until the load value decreases to a predetermined threshold value, based on the load values for one press cycle. The calculation unit 104 also calculates the working time from when the upper die 20 contacts the workpiece material until the breakthrough phenomenon occurs after the punching is completed, or until the load value decreases to the predetermined threshold value.

The information generation unit 105 generates information on a state of a die based on the total load calculated by the calculation unit 104 based on the load values for one press cycle detected by the detection unit 102 and the total load calculated by the calculation unit 104 based on the load values for one press cycle stored in association with the die attached to the press machine during the detection of the load value and the SPM during the detection of the load value, and outputs the information to the display 120. In addition, the information generation unit 105 generates information on the state of the die based on the working time calculated by the calculation unit 104 based on the load values for one press cycle detected by the detection unit 102 and the working time calculated by the calculation unit 104 based on the load values for one press cycle stored in association with the die attached to the press machine during the detection of the load value and the SPM during the detection of the load value, and outputs the information to the display 120.

The user interface 110 is a known input means (for example, a mouse, a trackball, a keyboard, or the like) that allows an action on the display 120. Further, the user interface 110 may be provided integrally with the display 120. In this case, an input means is displayed on the display 120.

The display 120 is a liquid crystal display (LCD) screen. Other known display devices (for example, organic Electro Luminescence (EL) or the like) may be used as the display 120. Further, a touch panel type display may be used as the display 120. As the touch panel, a touch panel of a known type such as a resistive film type, a capacitance type, a surface type capacitance type, or a projection type capacitance type can be used. As long as the display is of the touch panel type, an input action is achieved by directly touching the display 120 with a finger or a pen.

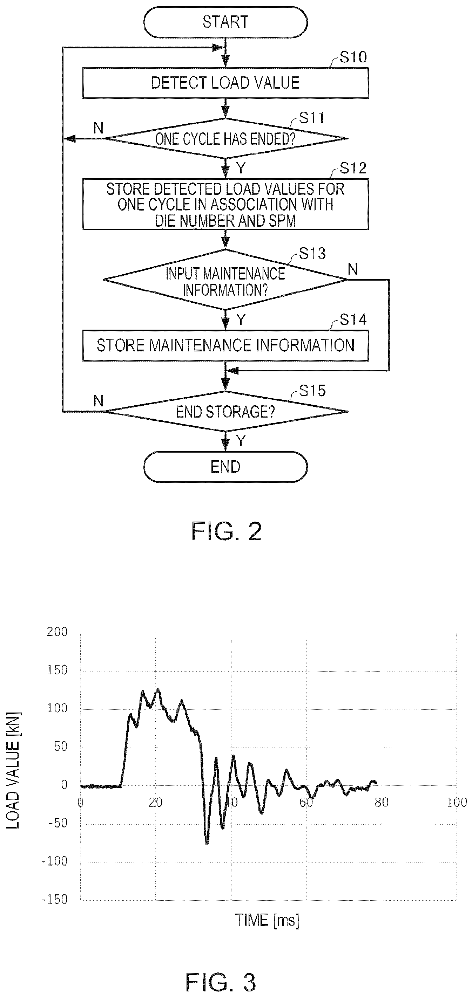

FIG. 2 is a flowchart illustrating a flow of processing for storing load values. First, the detection unit 102 receives a signal output from the load sensor 30, converts the received signal based on the calibration data stored in the storage unit 103, and detects the converted data as the load value (Step S10). Next, the control device 100 determines whether or not one cycle of the press has ended based on information on the current crank angle (Step S11), and when the one cycle has not ended (N in Step S11), the processing proceeds to Step S10 and continues detecting the load value. When the one cycle is completed (Y in Step S11), the storage unit 103 stores the load values (a load waveform data) for one press cycle detected in association with the die number of the die attached to the slide 17 and the bolster 18 of the press machine 1 during the detection, the SPM, and time information (a timestamp) during the detection (Step S12). FIG. 3 is a diagram in graph illustrating the load values (the load waveform) for one press cycle, with the time (unit: ms) on the horizontal axis and the load values (unit: kN) on the vertical axis.

Next, the control device 100 determines whether or not a user has entered die maintenance information (a die number of the die on which a maintenance (a polishing) has been performed, a maintenance date) into the user interface 110 (Step S13), and when the maintenance information has been entered (Y in Step S13), the storage unit 103 stores the entered maintenance information (Step S14). Next, the control device 100 determines whether or not to terminate the storage of the load values (Step S15), and when the storage is to be continued (N in Step S15), the processing proceeds to Step S10, and thereafter stores the load values for one press cycle for each press cycle.

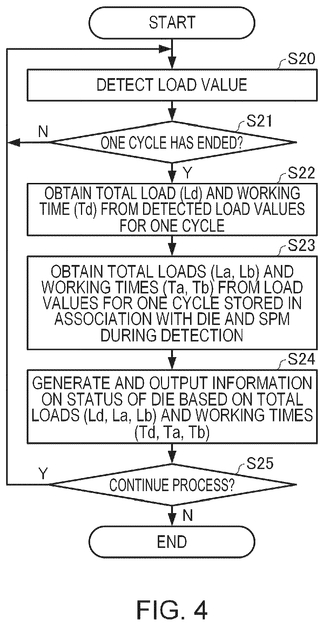

FIG. 4 is a flowchart illustrating a flow of processing for monitoring the state of the die (generating and outputting the information on the state of the die). First, the detection unit 102 receives a signal output from the load sensor 30, converts the received signal based on the calibration data stored in the storage unit 103, and detects the converted data as the load value (Step S20). Next, the control device 100 determines whether or not one cycle of the press has ended based on the information on the current crank angle (Step S21), and when the one cycle has not ended (N in Step S21), the processing proceeds to Step S20 and continues detecting the load value. When the one cycle is completed (Y in Step S21), the calculation unit 104 calculates a total load L which is a sum of the loads from when the upper die 20 contacts the workpiece material until the breakthrough phenomenon occurs after the punching is completed, or until the load value decreases to the predetermined threshold value and a working time T as the time from when the upper die 20 contacts the workpiece material until the breakthrough phenomenon occurs after the punching is completed, or until the load value decreases to the predetermined threshold value (Step S22), from the detected load values for one press cycle.

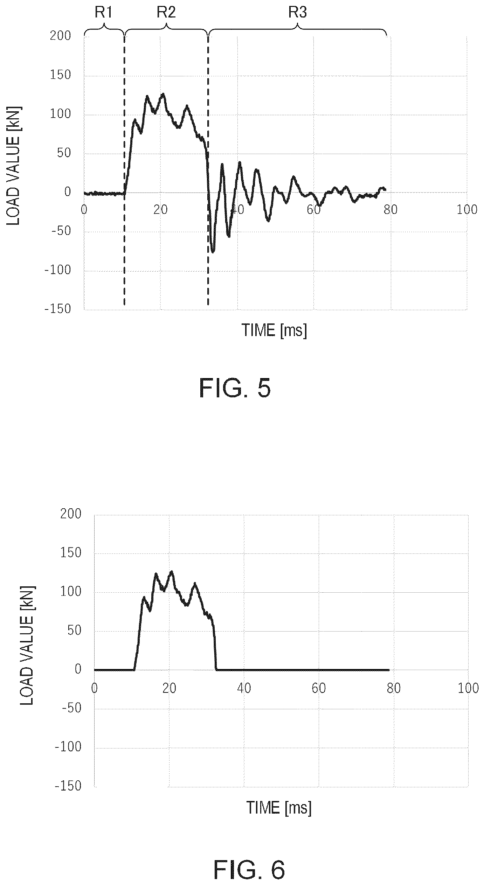

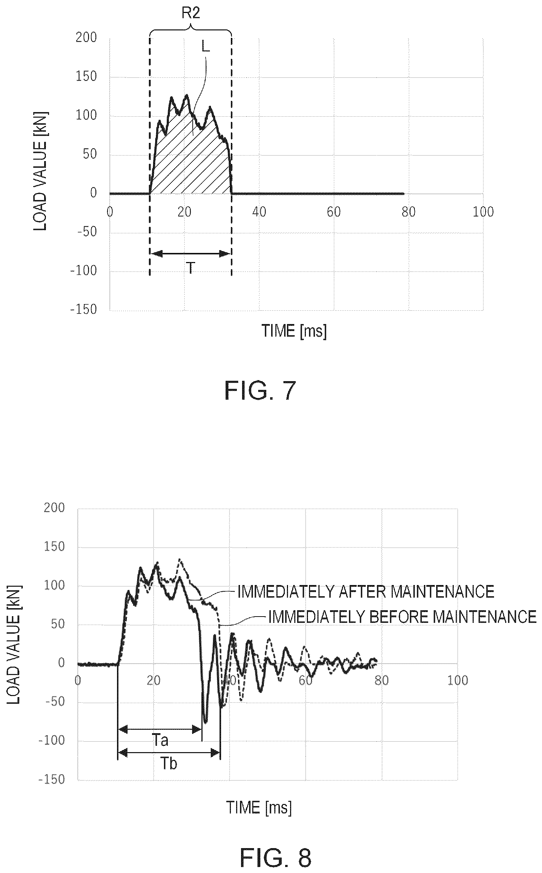

As illustrated in FIG. 5, the load values for one press cycle (the load waveform) during the punching can be divided into three major phases (regions R1 to R3). The region R1 as the first phase is a pre-working region from when the slide 17 starts to descend until the upper die 20 contacts the workpiece material. The region R2 as the second phase is a working region from when the upper die 20 contacts the workpiece material until the breakthrough phenomenon occurs after the punching is completed. The region R3 as the third phase is a region where a vibration waveform caused by the breakthrough phenomenon appears. The breakthrough phenomenon is a phenomenon in which the upper die 20 is momentarily pushed into the lower die 21 by a reaction of elastic deformation energy generated in the frames and the like of the press machine due to the press pressure generated by the punching, which is released immediately after a material separation occurs and attempts to return to its original state. The data of the region R2 as the working region is necessary for detecting the state of the die. FIG. 6 illustrates the data extracted only for the region R2 from the load waveform data in FIG. 5. In Step S22, as illustrated in FIG. 7, the total load L of the region R2 (a total sum of the loads from when the upper die 20 contacts the workpiece material until the breakthrough phenomenon occurs after the punching is completed, which corresponds to an area of a shaded region in the figure) and the working time T (the time from when the upper die 20 contacts the workpiece material until the breakthrough phenomenon occurs after the punching is completed) are obtained from the data of the region R2. In the time series of the load values for one press cycle illustrated in FIG. 5, the time point at which the load value exceeds a predetermined threshold value (for example, 10 kN) can be identified as a boundary between the region R1 and the region R2 (a time point at which the upper die 20 contacts the workpiece material). The time point at which the load value changes from a positive value to a negative value can be identified as a boundary between the region R2 and the region R3 (a time point at which the breakthrough phenomenon occurs after the punching is completed). When the pressure sensor provided in the hydraulic chamber formed in the slide 17 is used as the load sensor 30, no breakthrough phenomenon appears in the load waveform, and the load waveform is as illustrated in FIG. 6 from the outset. In this case, the time point at which the load value returns to the predetermined threshold value (for example, 10 kN) can be identified as the boundary between the region R2 and the region R3 (the time point at which the punching is completed).

Next, the calculation unit 104 acquires the load values for one press cycle in association with the die number of the die attached to the slide 17 and the bolster 18 of the press machine 1 during the detection of the load value in Step S20 and the SPM during the detection of the load value from the load values for one press cycle stored in the storage unit 103 in association with the die number and the SPM, and obtains the total load L and the working time T from the acquired load values for one press cycle (Step S23). Here, referring to the maintenance information stored in the storage unit 103, the load values for one press cycle stored immediately after the maintenance of the die are acquired to obtain the total load L (hereinafter referred to as "La") and the working time T (hereinafter referred to as "Ta") from the load values, and the load values for one press cycle stored immediately before the maintenance of the die are acquired to obtain the total load L (hereinafter referred to as "Lb") and the working time T (hereinafter referred to as "Tb") from the load values. For example, when the die number of the die attached during the load detection in Step S20 is "5" and the SPM at the time is "100," the load values for one press cycle stored in association with the die number "5" and the SPM "100" are acquired from the load values stored immediately before the maintenance of the die of the die number "5" and immediately after the maintenance.

Next, the information generation unit 105 generates information IL on the state of the die based on the total load L (hereinafter referred to as Ld) obtained in Step S22 and the total loads La and Lb obtained in Step S23, and generates the information IT on the state of the die based on the working time T (hereinafter referred to as Td) obtained in Step S22 and the working times Ta and Tb obtained in Step S23, and outputs the generated information IL and IT to the display 120 (Step S24). IL and IT are obtained by the following equations. $IL = \left(Lb-Ld\right) / \left(Lb-La\right) \times 100$ $IT = \left(Tb-Td\right) / \left(Tb-Ta\right) \times 100$

IL is a ratio of a difference between the total load Lb immediately before the maintenance and the total load Ld obtained in Step S22 to a difference between the total load Lb immediately before the maintenance and the total load La immediately after the maintenance, and is a value indicating a remaining life of the die based on the total load (unit: %). IT is a ratio of a difference between the working time Tb immediately before the maintenance and the working time Td obtained in Step S22 to a difference between the working time Tb immediately before the maintenance and the working time Ta immediately after the maintenance, and is a value indicating a remaining life of the die based on the working time (unit: %).

FIG. 8 illustrates the load values for one press cycle (a solid line) stored immediately after the maintenance and the load values for one press cycle (a broken line) stored immediately before the maintenance. As illustrated in FIG. 8, as the die wears, the total load L and the working time T increase while the total load La and the working time Ta immediately after the maintenance becomes the smallest and the total load Lb and the working time Tb immediately before the maintenance becomes the largest. When the total load Ld and the working time Td obtained in Step S22 are close to the total load La and the working time Ta immediately after the maintenance (the difference between Lb and Ld and the difference between Tb and Td are large), the remaining life (IL, IT) of the calculated die is close to 100%, indicating that the die has not worn out and that it is not time to perform the maintenance. On the other hand, when the total load Ld and the working time Td obtained in Step S22 are close to the total load Lb and the working time Tb immediately before the maintenance (the difference between Lb and Ld and the difference between Tb and Td are small), the remaining life (IL, IT) of the calculated die is close to 0%, indicating that the die is worn and the maintenance should be performed soon.

In Step S23, only the load values for one press cycle stored immediately before the maintenance is acquired to obtain only the total load Lb and the working time Tb. In Step S24, the difference between the total load Lb and the total load Ld may be set as the remaining life of the die based on the total load (IL = Lb - Ld), and the difference between the working time Tb and the working time Td may be set as the remaining life of the die based on the working time (IT = Tb - Td). In Step S24, it may be determined whether either IL or IT, or both, is below a predetermined threshold value, and when it is below the predetermined threshold value, information to that effect (information that it is time to perform the maintenance on the die) may be output.

Next, the control device 100 determines whether to continue the processing for monitoring the state of the die (Step S25), and when the processing is to be continued (Y in Step S25), the processing proceeds to Step S20, and thereafter generates and outputs the information IL and IT on the state of the die based on the total load Ld and the working time Td obtained for each press cycle.

According to the present embodiment, the load values during the punching are detected based on the signal from the load sensor 30 provided on the press machine 1, the total load Ld and the working time Td from when the upper die 20 contacts the workpiece material until the breakthrough phenomenon occurs after the punching is completed, or until time at which the load value decreases to the predetermined threshold value are obtained, and the information IL and IT on the state of the die based on the differences from the total load Lb and the working time Tb immediately before the maintenance are generated and output. Thus, it is possible to monitor the state of the die without attaching a sensor to the die.

## Claims

1. A press machine comprising:
a detection unit that detects load values during punching of a workpiece material based on a signal output from a sensor provided in the press machine;
a storage unit that stores the load values for one cycle of the press machine detected by the detection unit in association with identification information of a die attached to the press machine during detection of the load values;
a calculation unit that calculates a total load which is a sum of loads from when an upper die of the die contacts the workpiece material until the punching is completed, based on the load values for one cycle of the press machine; and
an information generation unit that generates and outputs information on a state of the die based on the total load calculated based on the load values for one cycle of the press machine detected by the detection unit and the total load calculated based on the load values for one cycle of the press machine stored in association with the die attached to the press machine during the detection of the load values.

2. The press machine according to claim 1,
wherein the information generation unit generates the information on a state of the die based on a difference between the total load calculated based on the load values for one cycle of the press machine detected by the detection unit and the total load calculated based on the load values for one cycle of the press machine stored in association with the die attached to the press machine during the detection of the load values.

3. The press machine according to claim 1,
wherein the calculation unit calculates a working time which is a time from when the upper die contacts the workpiece material until the punching is completed, based on the load values for one cycle of the press machine, and
wherein the information generation unit generates the information on a state of the die based on the working time calculated based on the load values for one cycle of the press machine detected by the detection unit and the working time calculated based on the load values for one cycle of the press machine stored in association with the die attached to the press machine during the detection of load values.

4. The press machine according to claim 3,
wherein the information generation unit generates the information on a state of the die based on a difference between the working time calculated based on the load values for one cycle of the press machine detected by the detection unit and the working time calculated based on the load values for one cycle of the press machine stored in association with the die attached to the press machine during the detection of load values.

5. A die condition monitoring method for a press machine, the method comprising:
a detection step of detecting load values during punching of a workpiece material based on a signal output from a sensor provided in the press machine;
a storage step of storing the load values for one cycle of the press machine detected by the detection step in association with identification information of a die attached to the press machine during detection of the load values;
a calculation step of calculating a total load which is a sum of loads from when an upper die of the die contacts the workpiece material until the punching is completed, based on the load values for one cycle of the press machine; and
an information generation step of generating and outputting information on a state of the die based on the total load calculated based on the load values for one cycle of the press machine detected by the detection step and the total load calculated based on the load values for one cycle of the press machine stored in association with the die attached to the press machine during the detection of the load values.

## Patentansprüche

1. Pressmaschine, umfassend:
eine Detektionseinheit, die Lastwerte während des Stanzens eines Werkstückmaterials basierend auf einem Signal detektiert, das von einem in der Pressmaschine vorgesehenen Sensor ausgegeben wird;
eine Speichereinheit, die die von der Detektionseinheit detektierten Lastwerte für einen Zyklus der Pressmaschine in Verbindung mit Identifikationsinformationen eines an der Pressmaschine angebrachten Gesenks während der Detektion der Lastwerte speichert;
eine Berechnungseinheit, die basierend auf den Lastwerten für einen Zyklus der Pressmaschine eine Gesamtlast berechnet, die eine Summe der Lasten ab dem Zeitpunkt des Kontakts eines Obergesenks des Gesenks mit dem Werkstückmaterial bis zum Abschluss des Stanzens ist; und
eine Informationserzeugungseinheit, die basierend auf der Gesamtlast, die basierend auf den von der Detektionseinheit detektierten Lastwerten für einen Zyklus der Pressmaschine berechnet wurden, und der Gesamtlast, die basierend auf den Lastwerten für einen Zyklus der Pressmaschine berechnet wurde, die in Verbindung mit dem an der Pressmaschine angebrachten Gesenk während der Detektion der Lastwerte gespeichert wurden, Informationen über einen Zustand des Gesenks erzeugt und ausgibt.

2. Pressmaschine nach Anspruch 1,
wobei die Informationserzeugungseinheit die Informationen über einen Zustand des Gesenks basierend auf einer Differenz zwischen der Gesamtlast, die basierend auf den von der Detektionseinheit detektierten Lastwerten für einen Zyklus der Pressmaschine berechnet wurde, und der Gesamtlast, die basierend auf den Lastwerten für einen Zyklus der Pressmaschine berechnet wurde, die in Verbindung mit dem an der Pressmaschine angebrachten Gesenk während der Detektion der Lastwerte gespeichert wurden, erzeugt.

3. Pressmaschine nach Anspruch 1,
wobei die Berechnungseinheit eine Arbeitszeit, die die Zeit ab dem Zeitpunkt des Kontakts des Obergesenks mit dem Werkstückmaterial bis zum Abschluss des Stanzens ist, basierend auf den Lastwerten für einen Zyklus der Pressmaschine berechnet, und
wobei die Informationserzeugungseinheit die Informationen über einen Zustand des Gesenks basierend auf der Arbeitszeit, die basierend auf den von der Detektionseinheit detektierten Lastwerten für einen Zyklus der Pressmaschine berechnet wurde, und der Arbeitszeit, die basierend auf den Lastwerten für einen Zyklus der Pressmaschine berechnet wurde, die in Verbindung mit dem an der Pressmaschine angebrachten Gesenk während der Detektion der Lastwerte gespeichert wurden, erzeugt.

4. Pressmaschine nach Anspruch 3,
wobei die Informationserzeugungseinheit die Informationen über einen Zustand des Gesenks basierend auf einer Differenz zwischen der Arbeitszeit, die basierend auf den von der Detektionseinheit detektierten Lastwerten für einen Zyklus der Pressmaschine berechnet wurde, und der Arbeitszeit, die basierend auf den Lastwerten für einen Zyklus der Pressmaschine berechnet wurde, die in Verbindung mit dem an der Pressmaschine angebrachten Gesenk während der Detektion der Lastwerte gespeichert wurden, erzeugt.

5. Verfahren zum Überwachen eines Gesenkzustands für eine Pressmaschine, wobei das Verfahren Folgendes umfasst:
einen Detektionsschritt des Detektierens von Lastwerten während des Stanzens eines Werkstückmaterials basierend auf einem Signal, das von einem in der Pressmaschine vorgesehenen Sensor ausgegeben wird;
einen Speicherschritt des Speicherns der von der Detektionseinheit detektierten Lastwerte für einen Zyklus der Pressmaschine in Verbindung mit Identifikationsinformationen eines an der Pressmaschine angebrachten Gesenks während der Detektion der Lastwerte;
einen Berechnungsschritt des Berechnens einer Gesamtlast, die eine Summe der Lasten ab dem Zeitpunkt des Kontakts eines Obergesenks des Gesenks mit dem Werkstückmaterial bis zum Abschluss des Stanzens ist, basierend auf den Lastwerten für einen Zyklus der Pressmaschine; und
einen Informationserzeugungsschritt des Erzeugens und Ausgebens von Informationen über einen Zustand des Gesenks basierend auf der Gesamtlast, die basierend auf den von der Detektionseinheit detektierten Lastwerten für einen Zyklus der Pressmaschine berechnet wurden, und der Gesamtlast, die basierend auf den Lastwerten für einen Zyklus der Pressmaschine berechnet wurde, die in Verbindung mit dem an der Pressmaschine angebrachten Gesenk während der Detektion der Lastwerte gespeichert wurden.

## Revendications

1. Presse comprenant :
une unité de détection qui détecte des valeurs de charge durant l'emboutissage d'un matériau de pièce sur la base d'une sortie de signal provenant d'un capteur pourvu dans la presse ;
une unité de stockage qui stocke les valeurs de charge pour un cycle de la presse détectées par l'unité de détection en association avec de l'information d'identification d'une matrice attachée à la presse durant la détection des valeurs de charge ;
une unité de calcul qui calcule une charge totale, qui est la somme des charges depuis le moment où la matrice supérieure de la matrice entre en contact avec le matériau de pièce jusqu'à la fin de l'emboutissage, à partir des valeurs de charge pour un cycle de la presse ; et
une unité de génération d'information qui génère et sort de l'information sur l'état de la matrice sur la base de la charge totale calculée à partir des valeurs de charge pour un cycle de la presse détectées par l'unité de détection et de la charge totale calculée à partir des valeurs de charge pour un cycle de la presse stockées en association avec la matrice attachée à la presse durant la détection des valeurs de charge.

2. Presse selon la revendication 1,
dans laquelle l'unité de génération d'information génère l'information sur l'état de la matrice sur la base d'une différence entre la charge totale calculée à partir des valeurs de charge pour un cycle de la presse détectées par l'unité de détection et la charge totale calculée à partir des valeurs de charge pour un cycle de la presse stockées en association avec la matrice attachée à la presse durant la détection des valeurs de charge.

3. Presse selon la revendication 1,
dans laquelle l'unité de calcul calcule un temps de travail, c'est-à-dire un temps écoulé entre le moment où la matrice supérieure entre en contact avec le matériau de pièce et le moment où l'emboutissage est terminé, à partir des valeurs de charge pour un cycle de la presse, et
dans laquelle l'unité de génération d'information génère l'information sur l'état de la matrice sur la base du temps de travail calculé à partir des valeurs de charge pour un cycle de la presse détectées par l'unité de détection et du temps de travail calculé à partir des valeurs de charge pour un cycle de la presse stockées en association avec la matrice attachée à la presse durant la détection de valeurs de charge.

4. Presse selon la revendication 3,
dans laquelle l'unité de génération d'information génère l'information sur l'état de la matrice sur la base d'une différence entre le temps de travail calculé à partir des valeurs de charge pour un cycle de la presse détectées par l'unité de détection et le temps de travail calculé à partir des valeurs de charge pour un cycle de la presse stockées en association avec la matrice attachée à la presse durant la détection de valeurs de charge.

5. Procédé de surveillance de la condition d'une matrice pour une presse, le procédé comprenant :
une étape de détection consistant à détecter des valeurs de charge durant l'emboutissage d'un matériau de pièce, sur la base d'une sortie de signal provenant d'un capteur pourvu dans la presse ;
une étape de stockage consistant à stocker les valeurs de charge pour un cycle de la presse détectées à l'étape de détection en association avec de l'information d'identification d'une matrice attachée à la presse durant la détection des valeurs de charge ;
une étape de calcul consistant à calculer une charge totale, qui est la somme des charges depuis le moment où la matrice supérieure de la matrice entre en contact avec le matériau de pièce jusqu'à la fin de l'emboutissage, à partir des valeurs de charge pour un cycle de la presse ; et
une étape de génération d'information consistant à générer et à sortir de l'information sur l'état de la matrice sur la base de la charge totale calculée à partir des valeurs de charge pour un cycle de la presse détectées à l'étape de détection et de la charge totale calculée à partir des valeurs de charge pour un cycle de la presse stockées en association avec la matrice attachée à la presse durant la détection des valeurs de charge.
